Europäisches Patentamt

(19) **European Patent Office**

Office européen des brevets

(11) Publication number: **0 202 701**
**B1**

(12) **EUROPEAN PATENT SPECIFICATION**

(45) Date of publication of the patent specification:
**31.01.90**

(21) Application number: **86200738.2**

(22) Date of filing: **28.04.86**

(51) Int. Cl.⁴: **B29C 45/14**

(54) Apparatus for encapsulating electronic components with plastics material.

(30) Priority: **14.05.85 NL 8501394**

(43) Date of publication of application:
**26.11.86 Bulletin 86/48**

(45) Publication of the grant of the patent:
**31.01.90 Bulletin 90/5**

(84) Designated Contracting States:
**DE FR GB IT NL**

(56) References cited:
**DE-A- 2 122 611**
**GB-A- 976 264**
**GB-A- 1 189 904**

**PATENTS ABSTRACTS OF JAPAN, vol. 6,
no. 52 (E-100)[930], 7th April 1982; & JP - A
- 56 164 542 (SONY K.K.) 17-12-1981
PATENTS ABSTRACTS OF JAPAN, vol. 9,
no. 89 (E-309)[1812], 18th April 1985; & JP - A
- 59 220 931 (SEIEI KOUSAN K.K.) 12-12-1984**

(73) Proprietor: **Boschman Tooling & Systems B.V.,**
**Helhoek 30, NL-6923 PE Groessen(NL)**

(72) Inventor: **Boschman, Everhardus Hendrikus,**
**Kerkweg 35, NL-6913 AJ Aerdt(NL)**

(74) Representative: **Coppens, Johannes H.M. et al,**
**Nederlandsch Octrooibureau Scheveningseweg 82 P.O.**
**Box 29720, NL-2505 LS Den Haag(NL)**

ACTORUM AG

## Description

The invention relates to an apparatus for encapsulating, with plastics material, electronic components which are fastened to the conductors of a strip which contains a plurality of components and which after the encapsulation with plastics material has to be divided into separate parts, said apparatus consisting of at least a mould comprising a bottom half and a top half which is adapted to move up and down, a sprue device which is disposed on one longitudinal side of the mould, and an apparatus for feeding plastics pellets, the mould being so constructed that the strip or strips can be moved in its or their longitudinal direction into and out of the mould in one and the same direction of movement in a stepwise process.

An apparatus of this kind is known from the preliminary published Dutch Patent Application No. 8203253. In this known apparatus the strip has a length many times greater than the length of the part of the strip which can be received in the mould and the injection for filling the mould cavities with plastics material for the purpose of encapsulating the components is effected from the side of the mould, while in addition the mould used is preferably composed of parts constructed in the manner described in the preliminary published Dutch Patent Application No.8203255. In this known apparatus the long strip can be advanced in steps. In this application, however, no attention is paid to the manner in which a stepwise process of this kind can be automated.

The invention seeks to provide a solution to this problem, and in fact a solution which is suitable not only for very long strips but also for short strips whose length is equal to that of the mould comprising a plurality of mould cavities.

According to the invention this aim is now in the first place achieved in that on the other long side of the mould or moulds, remote from the sprue, a guide track is provided which extends parallel to the long side and on which is slidably guided a clamp device which can act on the longitudinal edge of the strip and by longitudinal displacement can place the latter in the mould and remove it from the mould after the encapsulation, while means are provided for opening and closing the clamp device and for the vertical movement of the strip during its introduction into the mould and its extraction therefrom. The invention thus now once again makes use of the side of the mould, but of the side which lies opposite the side where the sprue is disposed, and it does this by disposing on this other side a guide track for a clamp device which in the open position can move upstream, referring to the direction of transport, and can then be clamped on the part of the strip situated there, or on the strip situated there, whereupon it can move this part of the strip or the strip downstream until it is situated above the open mould, when the strip part or strip can be placed in the mould through the opening of the clamp and by the desired vertical displacement.

In the same way the clamp device can be used for lifting a processed strip part or strip out of the mould, and for moving the strip further in the downstream direction. The stepwise process can be automated in this way.

Further advantages of the invention results from the features contained in the dependent claims.

According to the invention it may then be of great advantage, for both long and short strips, for the slidable clamp device to be moved between a preliminary station situated upstream of the mould in the direction of transport, the mould and a discharge station following the mould. In the case of a very long strip the preliminary station and the discharge station may be guides and may optionally be used for preheating the strip in the one case and for dividing the strip with the encapsulated components into pieces, in the other case.

If use is made of a single clamp device which has to attend to both the feeding of the strip to the mould and its extraction from the latter, time will be wasted. According to the invention it is therefore preferable that the clamp device should consist of two clamps which are disposed a fixed distance apart and are joined to one another for simultaneous longitudinal movement, that the distance between the preliminary station and the mould and that between the mould and the discharge station should coincide with the distance between the clamps, and that the length of the longitudinal displacement of the clamp device for each forward or return movement should be equal to this distance. The two synchronously moving clamps can then operate in such a manner that in the lifting of a processed product out of the mould with the aid of the one clamp the other clamp, situated upstream, will move the or a strip towards the mould. The return movement can then take place during the period of time required for the curing of the plastics material contained in the closed mould.

The preliminary station preferably consists of a support surface and of positioning means, while the support surface on the preliminary station is preferably provided with heating means. The positioning means may consist of pins which have a sharp point and which pass through openings in the strip and penetrate into holes in the support surface.

Although the guide track can thus be disposed along one side of the mould, the opposite side to that where the injection means are situated, according to the invention it is preferable for the mould to consist of two moulds which are disposed parallel and next to one another, and for the guide means for the clamp device, which is provided with clamps for two strips spaced apart (one for each mould), to be situated between the moulds.

The guide track for the clamp device and its clamps is thus now situated between two moulds, and hence also between two support surfaces of the preliminary station and between two discharge stations. The apparatus is thus substantially duplicated.

If the strip is not fed in the form of a very long strip but, as is more usual, in the form of short strips which are stored in a cassette in order to ensure that the components, such as integrated circuits, will not be damaged during transport, then according to the invention automation is further possible by disposing upstream of the preliminary station, referring to the direction of transport, an apparatus having at least one cassette which contains a number of strips provided with components and lying one above the other in horizontal slide guides, and which is movable stepwise in the vertical direction, the steps corresponding tn the vertical distance between the strips, said cassette having an open end wall, while the apparatus has a reciprocatingly movable gripping and transport device which is provided with a gripper adapted to act on the short front edge of a strip contained in the cassette and to move this strip out of the open end wall of the cassette and deposit it at the preliminary station.

On each occasion the gripper seizes a strip and deposits it at the preliminary station, whereupon the clamp device attends to its further stepwise movement.

When the encapsulation has been effected and the mould has been opened through the lifting of the top half-mould, sprues will remain on the strip and have to be removed. According to the invention this is achieved by providing downstream of the mould or moulds and upstream of the discharge device (referring to the direction of transport) a stripping and break-off device which lies in the path of the sprues attached to the strips moved by the clamp device from the mould to the discharge device. When the clamp device thus lifts each strip out of the mould and moves it in the direction of the discharge device, all the sprues are broken off and removed. The discharge device may also be provided with a mechanism adapted to move stepwise in the downward direction and consisting of a set of support strips adapted to pass through vertical slots in the wall of a holding cassette which in its bottom has openings through which the support strips can pass. The clamp, which at the end of the movement towards the discharge device makes a downward movement, brings a strip above the open top face of the cassette. In order now to ensure that on each occasion the strip will be correctly placed in the cassette, it is possible for transversely movable fingers to be disposed next to the support strips projecting into the cassette, which fingers are adapted to move a strip, which has been freed by a clamp device, sideways to a position above the cassette and to deposit it therein. The construction of these fingers may be such that they comprise an elongate shell of elastic material having a bellows-like profile on the side remote from the cassette, said fingers being adapted to be connected to a source of medium under pressure. At the end of the downward movement of the clamp, at the moment when the latter opens, these fingers thus give a slight tap against the side of the stip, so that the latter will butt against the side wall of the cassette.

In order to increase production it is in addition possible for the preliminary station, the mould and the discahrge station to be constructed to receive two strips at a time, one behind the other, each clamp being constructed for simultaneously handling these two strips. Two or four strips are thus moved at a time, depending on whether the guide track is situated at one side of two moulds or between four moulds.

This requires the use of the mechanism which takes the strips out of a cassette, and according to the invention this can be achieved by providing the reciprocatingly movable gripper with a control mechanism which in each case first allows the gripper to make a long movement in order to place the foremost of the two strips in the prelinminary station, and then a short movement in order to position the second strip. This operation of extracting the strips from the cassette and positioning them one behind the other by means of the respective long and short movements obviously takes place during a period of time in which the clamp device is still situated at the mould.

Each clamp device may consist of a fixed jaw and a jaw pivoting about a longitudinal axis, the two jaws being held in the open position by a compression spring, while opposite the spring acting on an arm of the movable jaw a hose is disposed which acts on the other side of the arm and can be inflated by means of a medium under pressure in order to close the clamp.

Whenever a strip has to be raised, either out of the preliminary station or out of the mould, a vertical movement is necessary, and according to the invention this is achieved by mounting the guide track for the clamp device for upward and downward movement parallel to itself in the vertical direction, and coupling it to an operating mechanism. The whole guide is thus moved up; this movement will not generally be more than 10 mm. The construction for this purpose will preferably be such that guide track consists of fixed parallel rods fastened to a carrier beam and in the form of one pair of rods at the preliminary station and one pair of rods at the discharge station, the front and rear ends of the clamp device being guided by means of guide bushes on the pairs of rods and the front end being coupled to an endless cogged belt adapted to move to-and-fro in the transport direction and situated at the discharge station, which belt is coupled to a drive motor, while the support beam is guided for sliding by means of two vertical columns in bushes on the frame of the apparatus, these columns being joined by a crossbar coupled to a hydraulic operating cylinder. This results in a sturdy construction, which is necessary because after the positioning in the preliminary station the clamping and movement of the strips must be effected with great precision.

If cassettes are used on the feed side, these may naturally be accommodated in a mechanism containing a plurality of filled cassettes, and advancing them whenever a cassette is completely emptied.

The invention makes it possible for strips containing electronic components, such as integrated circuits, to be encapsulated with plastics material in a continuous stepwise process.

The invention will now be more fully explained with reference to the drawings.

Figure 1 is a front view in perspective of the apparatus according to the invention.

Figure 2 is a front view of the most important part of the apparatus according to the invention.

Figure 3 is a top plan view corresponding to Figure 2.

Figure 4 is a section on the line IV - IV in Figure 3.

Figure 5 is a section and elevation of a part of the apparatus, showing the means for removing the sprues.

Figure 6 is a top plan view corresponding to Figure 5.

Figure 7 is a section on the line VII - VII in Figure 5.

Figure 8 is a section, partly in elevation, taken transversely to the direction of transport through a discharge station.

Figure 9 is a side view, partly in section, of the discharge station.

Figure 10 is a top plan view corresponding to Figure 9.

Figure 11 is a top plan view of the positioning and preheating station.

Figure 12 is an end view, partly in section, of the part shown in Figure 11.

Figure 13 is a side view of the most important part of the mould portion of the apparatus according to the invention.

Figure 14 is an end view of the mould portion.

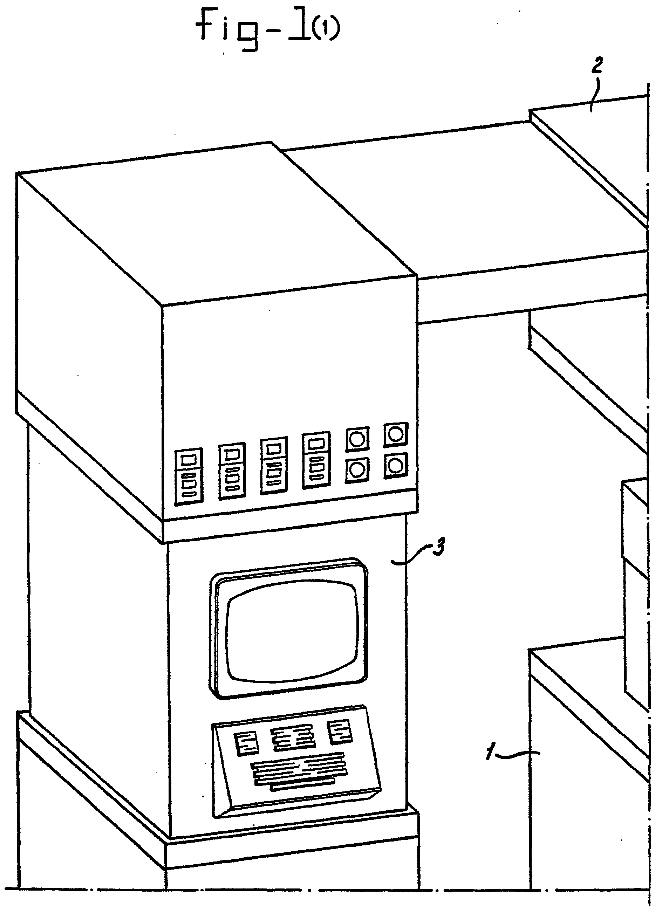

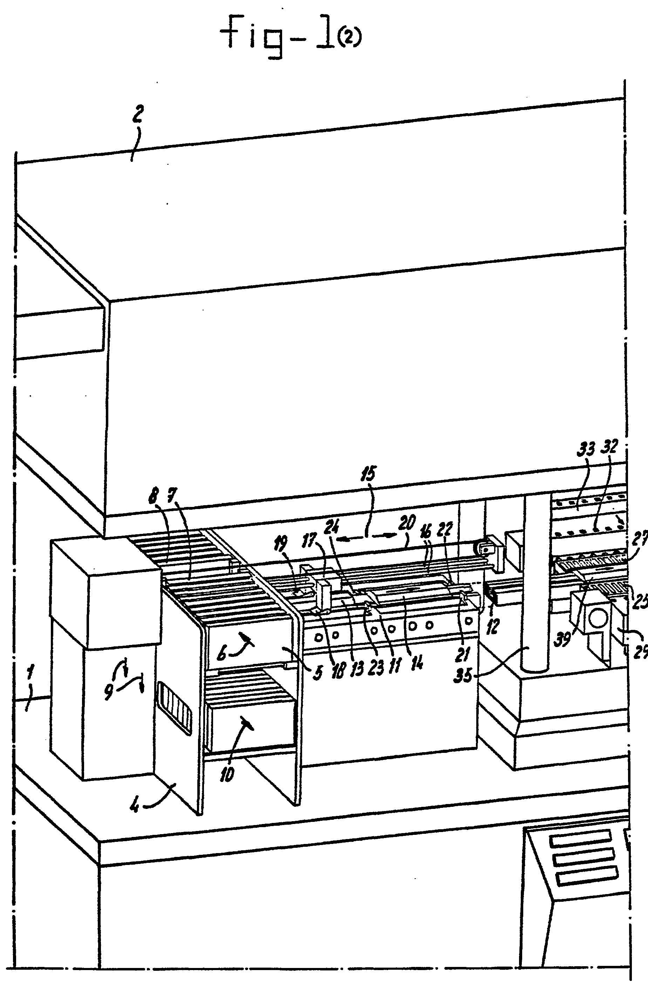

The apparatus according to the invention shown in perspective in Figure 1 comprises a bottom casing 1 containing the main frame of the apparatus together with operating means, a top casing 2 containing, among other items, the pressure cylinder of the moulding press together with the plastics pellets feed system, and further a side casing 3 containing programming and control equipment, which is immaterial to the description of the present invention.

Between the bottom casing 1 and the top casing 2 is situated the actual mechanism of the apparatus according to the invention, which comprises, viewed from left to right, firstly a frame 4 containing means for carrying a plurality of storage cassettes 5 which are arranged one against the other and which can be moved stepwise towards one another, as shown by the arrow 6, from opposite directions and, in the middle region at 7 and 8, can be moved stepwise in such a manner that an extraction mechanism, which will be further described later on, can take one strip, containing electronic components, at a time from the guides in the cassette, via the right-hand end wall.

During this operation the cassettes move stepwise downwards as indicated by the arrows 9, and then stepwise outwards as indicated by the arrow 10 for the discharge of empty cassettes, which can be refilled elsewhere.

On the right of this feed system is situated a support and positioning table given the general reference 11 and consisting of two parts which extend parallel to one another and are spaced apart, and which are situated on opposite sides of a sectional member which is given the general reference 12, the guide means for the clamps 13 and 14, which are adapted to move to-and-fro in the manner indicated by the arrows 15, being situate therebetween.

Above this table 11 is disposed a guide mechanism consisting of two parallel bars 16 on which is guided a block 17 carrying grippers 18 and 19 provided with jaws directed towards the left and adapted to be opened and closed with the aid of a mechanism (not further shown), for example an electromagnetic or pneumatic mechanism, these jaws being adapted to act on the end edge of a strip. The block 17 is coupled to an endless belt 20 by means of which the block can be moved towards the right and back again. When the movement to the right is made, each gripper 18, 19 extracts a strip from a cassette (cassettes 7 and 8 respectively) and moves it to the right as far as the respective stop 21 or 22, where the grippers release the strips, so that the latter arrive on their support surfaces on the table 11.

The grippers then move back, grip the next strip from the respective cassettes 7 and 8, which are advanced stepwise, and then move them over a shorter path to the respective stops 23 and 24.

During these movements the clamps 13 and 14 are not situated at this station, but at the moulding station lying to the right thereof.

This moulding station is only indicated diagrammatically, and is shown in the open position, so that only the bottom hald-moulds 25, 26, 27 and 28 are shown, each with a plurality of mould cavities. Along the outer long sides of the bottom half-moulds are disposed blocks 29 and 30, in which are situated the pressure cylinders for filling the cavities of the closed mould with plastics material. At 31 and 32 respectively openings are indicated for the feeding of pellets of plastics material from a diagrammatically indicated filling mechanism 33, which is adapted to move to and from a station situated to the right thereof, in accordance with the arrow 34, the filling mechanism being filled as indicated at 34. At that point pellets are loaded into the strip 33, and after being carried to the position indicated at the moulding station these pellets can be transferred to the storage cavities of the injection mechanism. The upper half-mould is not shown and is here situated some distance above the lower half-mould; it can be guided by the columns 35 and moved by a pressure cylinder towards and away from the bottom half-mould.

Mechanisms 36 for removing sprues are situated to the right of the moulding station and are followed, further to the right, by a discharge station, which will be described more fully later on and which has cassettes 37 and 38 on one side and also cassettes on the opposite side.

The sectional member 12 extends over the entire length of the three stations.

The clamps 13 and 14, which will be further described later on, act on the side edges of the strips positioned on the table 11, and these clamps 13 and 14 are fastened by means of a bar (not shown in Figure 1) to one and the same set of clamps 39 and 40; this system of clamps 13, 14, 39, 40 is coupled to a mechanism (not shown in Figure 1), by means of which this clamp system can be moved to-and-fro. When the clamps are simultaneously moved from the position shown in Figure 1 in such a manner that the clamps 13 and 14 arrive at the moulds, the clamps 39 and 40 will at the same time move to the discharge station. On this movement the clamps 13 and 14 will each take hold of a strip by the two longitudinal edges and lift it, while the clamps 39 and 40 will do the same. When all the clamps then move to the right, the clamps 13 and 14 can deposit the strips in the moulds, and the clamps 39 and 40 can discharge the strips containing encapsulated components to the discharge cassettes 37 and 38. The clamps can then make a return movement, which can take place during a period of time when the apparatus is attending to other operations, such as the encapsulation of the components with plastics material in the mould cavities.

When the clamps have clamped strips, the latter must be slightly raised, either from the table 11 or out of the bottom half-mould; this is done by allowing the entire guide beam 12 to make an upward movement of the order of magnitude of 10 mm. In the case of the bottom half-mould this takes place synchronously with a shorter movement of ejector pins which act on the strips between the mould cavities.

Clamps which are opened at the discharge station release the strips, whereupon the latter can be loaded into the discharge cassettes with the aid of a mechanism which will be described in greater detail later on.

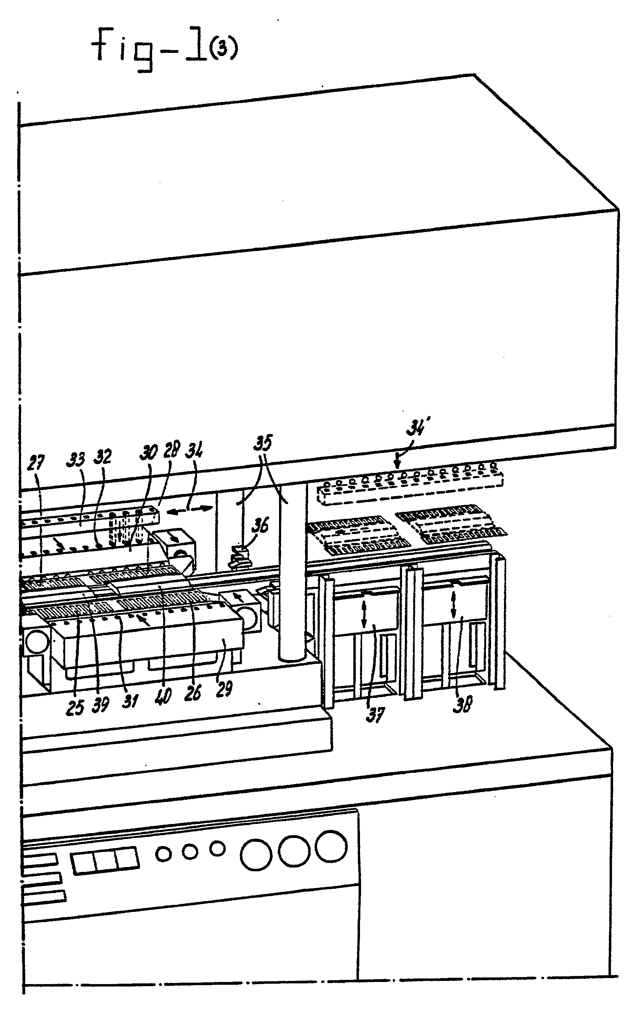

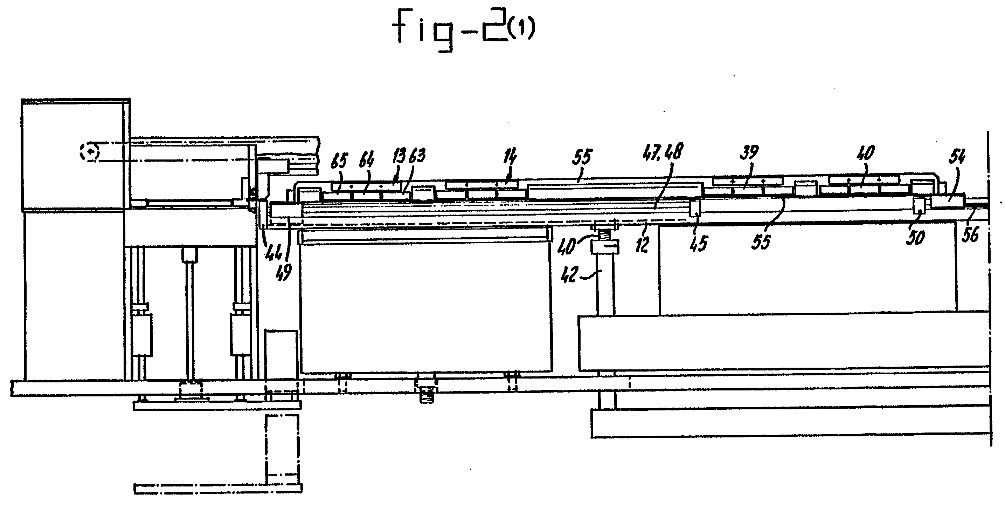

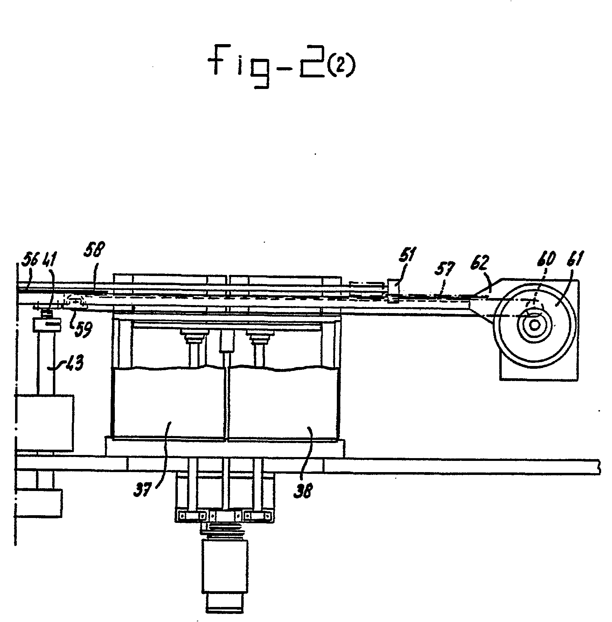

Figures 2 and 3 serve to explain diagrammatically the central guide mechanism which is situated between the bottom half-moulds and the two parts of the support table 11. This mechanism consists of the substantially U-shaped central sectional membser 12, which is carried by vertical columns 40 and 41, which are telescopically guided in tubes 42, 43 and which can be moved a short distance up and down with the aid of a mechanism not shown in Figure 2.

The sectional member 12 is provided with cross-44 and 45, between which two cylindrical bars 47, 48 parallel to one another are disposed, a block 49 being adapted to slide over said bars.

At the other end portion of the central sectional member 12, cross-rails 50 and 51 are also disposed, between which bars 52 and 53 are similarly disposed, a block 54 being mounted for sliding over said bars 52 and 53.

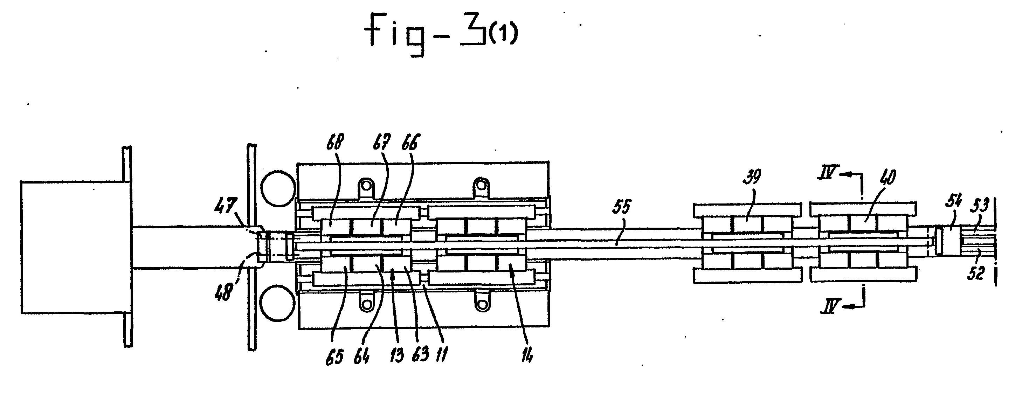

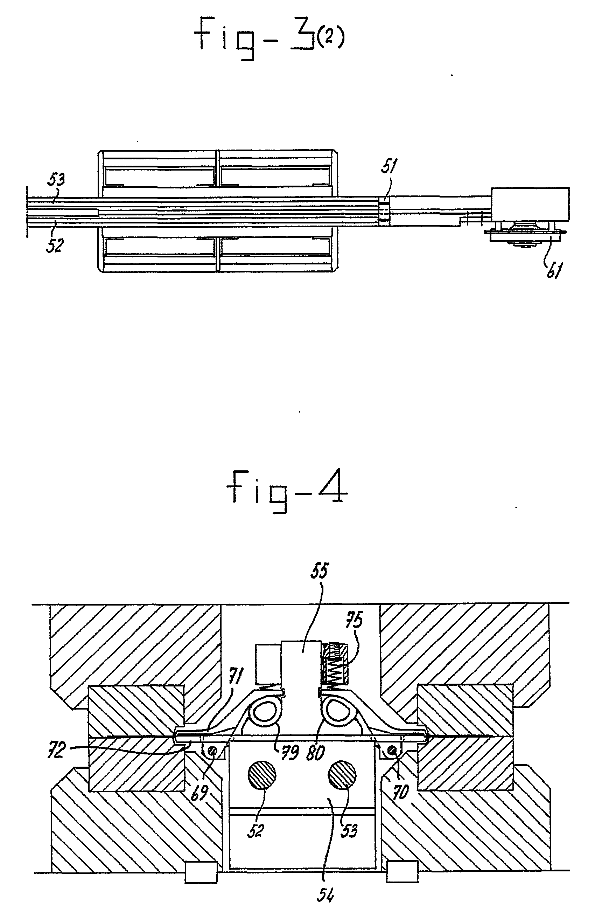

The blocks 49 and 54 carry a sectional member 55, on which in turn the clamps 13, 14 and 39, 40 respectively are fastened; the construction of these clamps will be further explained with reference to Figure 4.

The right-hand block 54 is fastened by means of a horizontal strip 56 to an endless cogged belt 57 at the point 58, said cogged belt running over the return wheel 59 situated to the left of the discharge station containing the cassettes 37 and 38, and also over a return wheel 60 which is driven by a motor 61 fastened to the central sectional member 12 by means of a projecting arm 62. With the aid of the motor 61 the cogged belt 57 can be moved to-and-fro, and thus the clamps 13, 14 and 39, 40 respectively can be moved conjointly between the different stations.

Each clamp 13, 14, 39, 40 has three clamp jaws 63, 64, 65 to the left of the longitudinal centre line of the apparatus and three clamp jaws 66, 67, 68 to the right, as indicated at top left in Figure 3 in the case of the clamp 13. Each clamp jaw is pivotally fastened at 69 or 70 respectively and has an outwardly directed flat jaw 71 cooperating with a bottom plate or bottom jaw 72 fastened on the sectional member 55. The jaws 71 and 72 can act on the edge of a strip 73, as shown in Figure 4. In the upward direction the clamp jaws have arms 74 acted on by compression springs 75 accommodated in casings 76 fastened against the side of the central sectional member 55. This sectional member, which has the shape of an inverted T, is provided with cavities 77, 78 in which hoses 79, 80 are disposed.

The springs press the clamp jaws into the open position. By means of the hoses the clamp jaws are closed when pressurized medium is fed to the hoses.

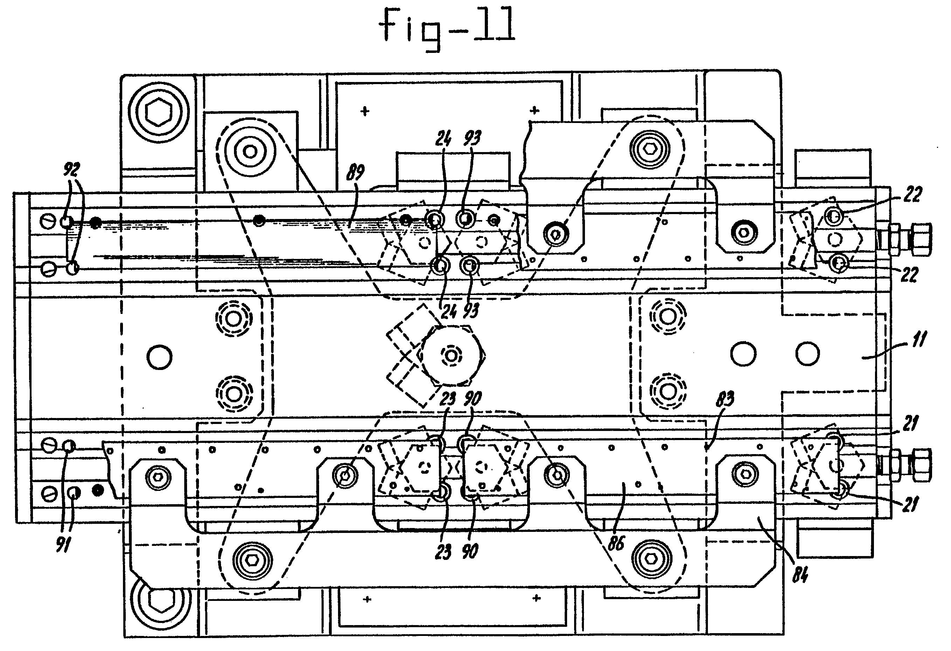

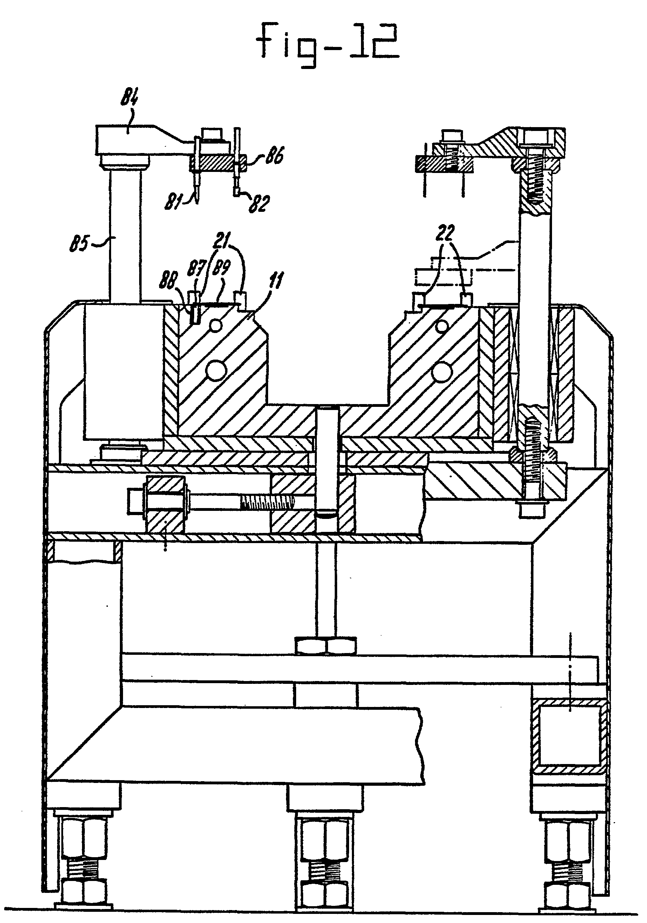

Figures 11 and 12 show in greater detail the positioning mechanism at the table 11.

This table is preferably provided with heating elements, so that the strips placed on it can be preheated in order to enable them to be placed in the mould with the aid of the clamps.

Extremely accurate positioning is necessary in order to ensure good encapsulation with plastics material and to prevent damage to the connections between the electronic components and the conductors.

For this reason, not only are stops 21 to 24 provided, as shown in Figure 1, for positioning the strips, but pins 81, 82 are also provided which are adapted to move up and down vertically from above and which cooperate with holes, such as 83, in the strips. Theses pins are fastened to arms 84 on bars 85 which are movable up and down, the arms 84 carrying plates 86 in which the centering and positioning pins 81 and 82 are disposed. These pins, particularly the pins 81, cooperate with the bores 87 in a bush 88 in the support table 11.

In this way extremely accurate positioning of a strip, such as 89, between the end stops is possible, these end stops being formed on the one hand by the previously mentioned stops 21 to 24, while on the other hand they may consist of pins 90, 91, 92 and 93.

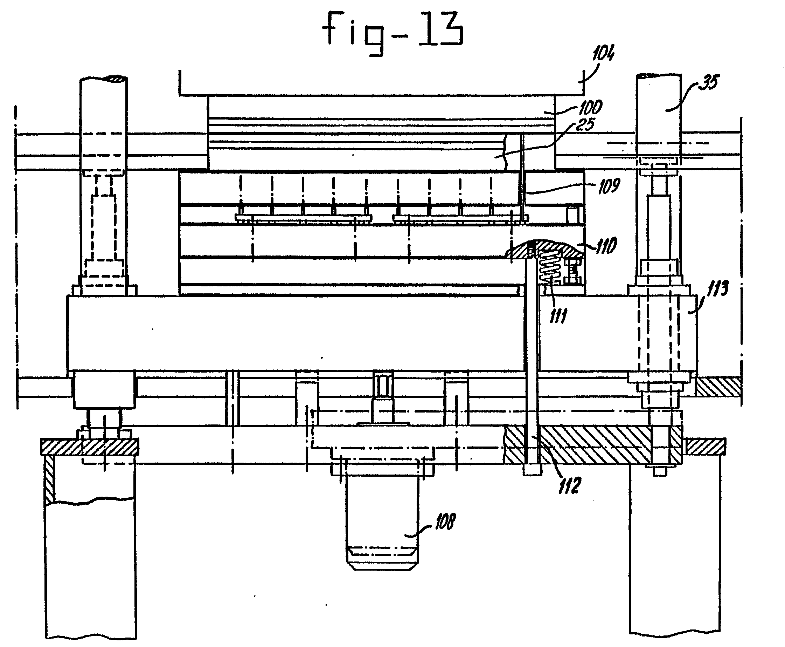

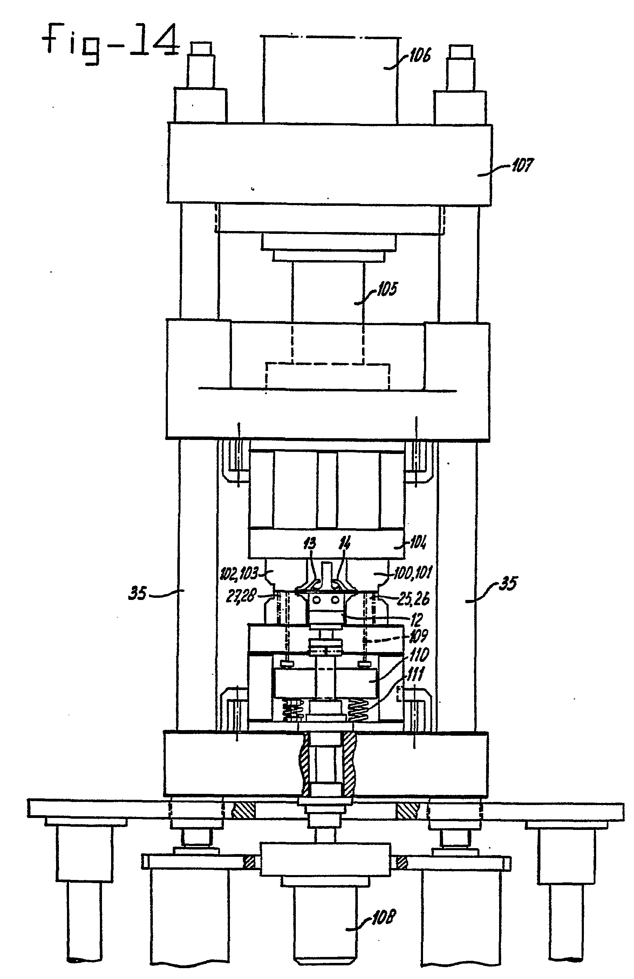

Figures 13 and 14 show some details of the moulding station.

This station comprises the bottom half-moulds 25 to 28, which are held fast in the frame, and top half-moulds 100 to 103 which are fastened on a carrier frame 104 connected to the plunger 105 of a pressure cylinder 106. This plunger acts on a transverse frame 107 guided on columns 35.

Figure 14 shows the closed position with interposed clamps 13, 14 and 39, 40 respectively. For the sake of clarity the injection mechanism is omitted here.

When strips have to be taken out of the mould or have to be placed in it, with the mould in the open position, a vertical movement of the clamps is necessary for this purpose. This is achieved by moving the sectional member 12, which is guided for vertical sliding on the columns 41 and 42 (Figure 2), up and down with the aid of the motor 108. For the purpose of lifting strips containing encapsulated components out of the mould, ejector pins are desirable, as diagrammatically illustrated at 109, these pins being fastened on a carrier 110 which can be raised by the action of springs 111 but at the same time is limited in respect of its freedom to move by limiting bars 112, which ensure that the ejector pins 109 move only a distance of a few millimetres, while the beam 113 couple to the beam 12 can make a slightly greater movement.

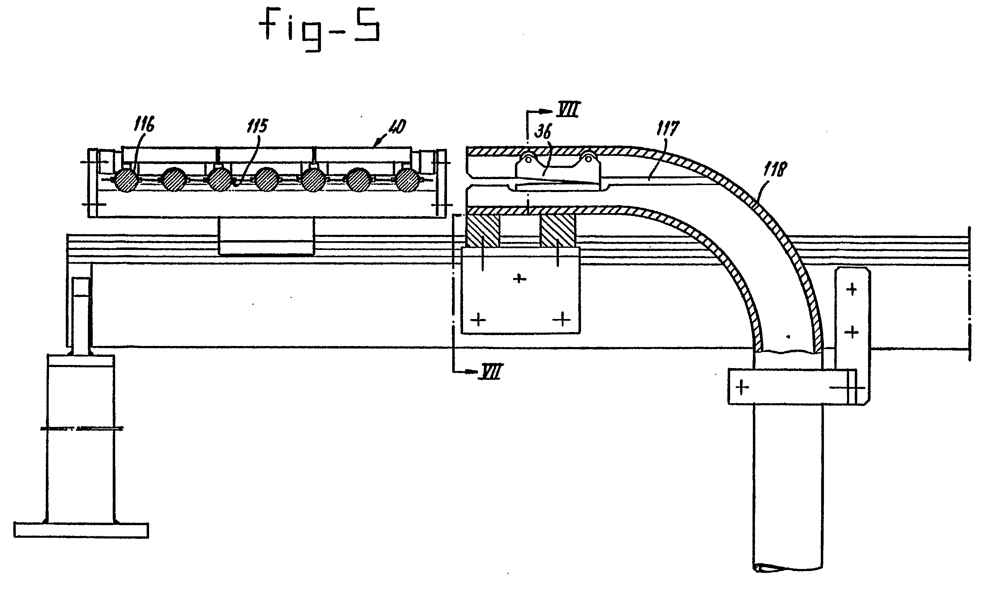

Figures 5, 6 and 7 serve to explain the means required for ensuring that, after the encapsulation of the electronic components in a strip, the sprues are removed during the further movement towards the discharge cassettes.

In Figure 1 this is the place indicated by the reference numeral 36.

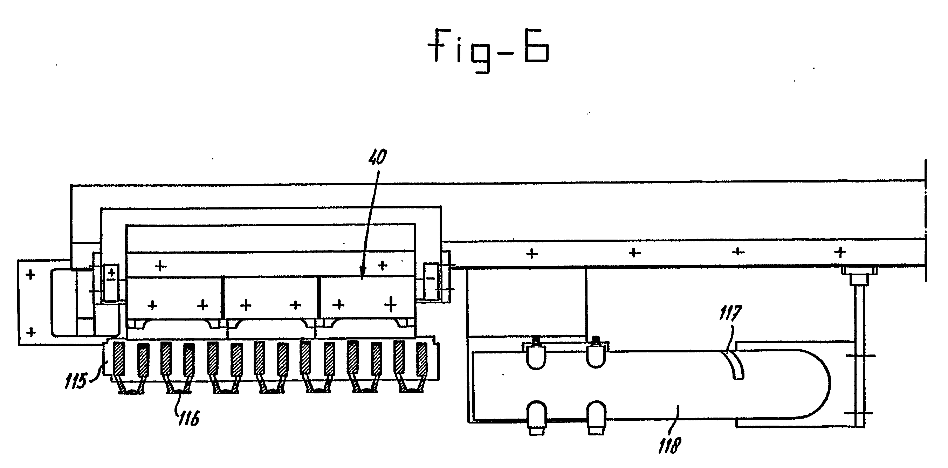

Figure 6 now shows a strip 115 carrying sprues 116, this strip being situated in the jaws of a clamp, such as 40.

When the clamp is moved towards the discharge station, that is to say to the right in Figures 5 and 6, the strips are then moved by the clamp into the path of the break-off or cut-off mechanism 36, which is situated in a tube which is open at the bottom and whose opening is formed by a slot 117 large enough to allow the strip to pass through. The sprues 116, which are broken off by the mechanism 36, fall into the downwardly bent tube 118 and can be discharged, if necesary with the aid of vacuum.

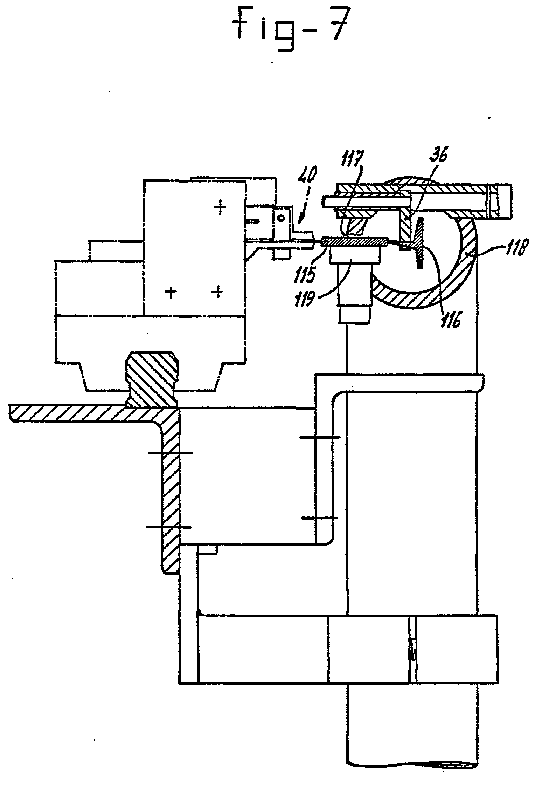

Figure 7 shows how the strip 115 is guided through the slot 117 while supported by a table 119, and how the sprues are then guided through the discharge tube.

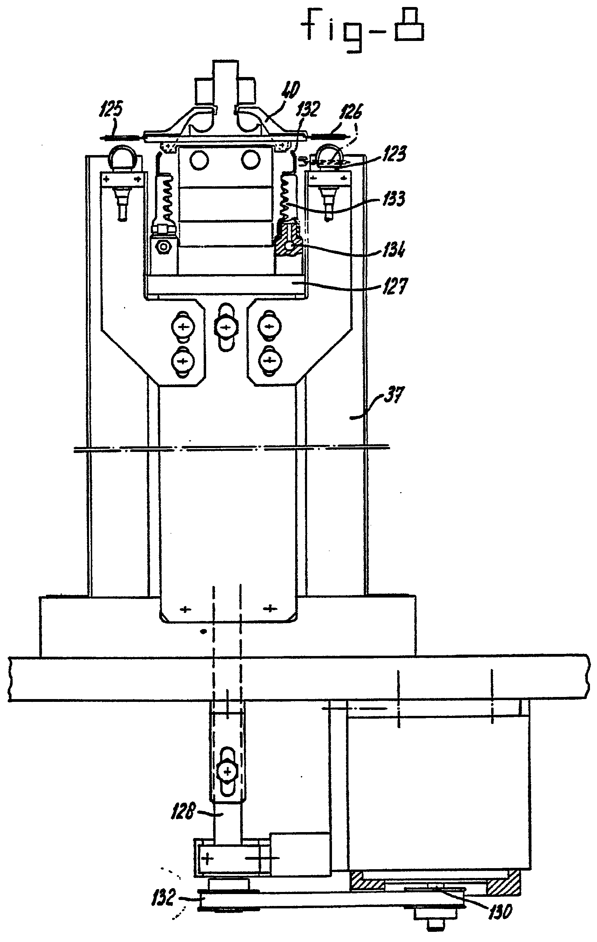

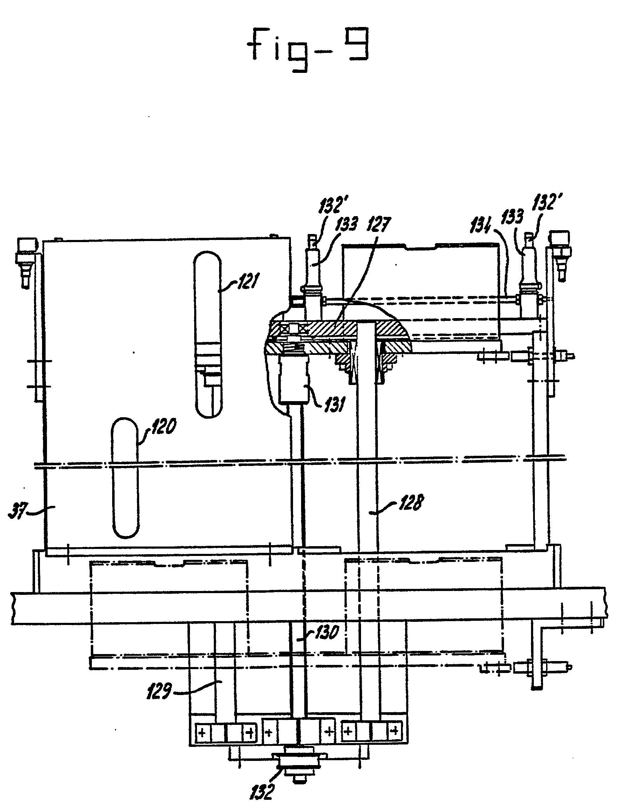

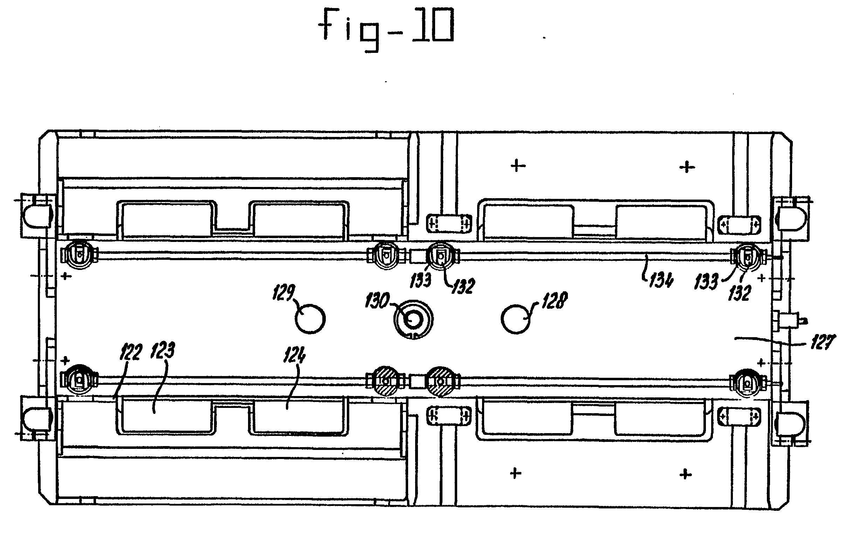

Figures 8, 9 and 10 relate to the discharge mechanism.

As already previously stated, discharge cassettes 37 and 38 lie on both sides of the central beam. These cassettes have a front wall provided only with window slots 120, 121, and a rear wall which is provided with openings 122 which extend in the vertical direction to and through the bottom of the cassette and which have a shape larger than the support lips 123, 124 of the mechanism which in the filling of the cassettes has to ensure a stepwise movement in the downward direction.

Figure 8 shows a clamp, such as 40, with strips 125, 126 which are held therein on the left and right and which with the aid of the central guide and clamp mechanism are carried to the discharge station while the central beam is in the slightly raised position.

The discharge station is now provided between the four cassettes with a table 127 which is guided on vertical columns 128, 129 and is connected to a rotatable threaded spindle 130 which engages in a nut 131. This spindle 130 can be driven by means of a pulley 132 by a motor (not shown) disposed next to the latter. The rotation of the spindle 131 has the effect that the nut 131, and with it the table 127, are moved up and down.

On the table are disposed the fingers 123, 124 in the form of U-shaped bows, as can be seen more clearly in Figure 8, which shows these bows in the top or starting position, and also in the lowermost position in which their supporting surfaces 123, 124 have passed out of the bottom of the cassette.

The table 127 also carries a number of fingers 132 which are fastened on the top end of finger-like operating devices 133 which on one side are in the form of bellows, to which pressurized medium can be supplied via the connection 134. When this occurs, the bellows portion is extended, so that the fingers curve outwardly, while the portion 132' likewise moves outwards. This should now occur at the moment when the clamp 40 releases the strips 125, 126 being fed and deposits them on the surfaces 123, 124 of the bows, which are carried by the table 127. These fingers 132', 133 then ensure correct positioning of the strips on the support surfaces 123, 124 and therefore in the cassettes.

Every time strips have been deposited the table 127 is moved one step downwards and this continues until the cassettes have been filled, whereupon they can be removed sidewyas and replaced by new cassettes. The table together with the support bows then moves back to the top starting position.

## Claims

1. Apparatus for encapsulating, with plastics material, electronic components which are fastened to the conductors of a strip which contains a plurality of components and which after the encapsulation with plastics material has to be divided into separate parts, said apparatus consisting of at least a mould comprising a bottom half (25, 26, 27, 28) and a top half (100, 103) which is adapted to move up and down, a sprue device (29, 30) which is disposed on one longitudinal side of the mould (25, 26, 27, 28) and an apparatus (33, 34) for feeding plastics pellets, the mould (25, 26, 27, 28) being so constructed that the strip or strips can be moved in its or their longitudinal direction into and out of the mould (25, 26, 27, 28) in one and the same direction of movement in a stepwise process, characterized in that on the other long side of the mould or moulds, remote from the sprue, a guide path (12) is provided which extends parallel to the long side and on which is slidably guided a clamp device (13, 14, 39, 40) which can act on the longitudinal edge of a strip and by longitudinal displacement can place the latter in the mould (25, 26, 27, 28) and remove it from the mould (25, 26, 27, 28) after the encapsulation, while means are provided for opening and closing the clamp device and for the vertical movement of the strip during its introduction into the mould (25, 26, 27, 28) and its extraction therefrom.

2. Apparatus according to claim 1, characterized in that the slidable clamp device (13, 14, 39, 40, 49, 54) is movable between a preliminary station (11) situated upstream of the mould (25, 26, 27, 28) in the direction of transport, the mould (25, 26, 27, 28) and a discharge station (37, 38) following the mould (25, 26, 27, 28).

3. Apparatus according to claim 1 or 2, characterized in that the clamp device (49, 54) consists of two clamps (13, 14; 39, 40) which are situated a fixed distance apart and are joined to one another for simultaneous longitudinal movement, that the distance between the preliminary station (11) and the mould (25, 26, 27, 28) and that between the mould (25, 26, 27, 28) and the discharge station (37, 38) coincides with the distance between the clamps (13, 14; 39, 40) and that the length of the longitudinal displacement of the clamp device (13, 14; 39, 40) for each forward or return movement is equal to this distance.

4. Apparatus according to claim 2 or 3, characterized in that the preliminary station (11) consists of a support surface (11) and of positioning means (17).

5. Apparatus according to claims 2, 3 or 4, characterized in that the support surface of the preliminary station is provided with heating means.

6. Apparatus according to one or more of the preceding claims, characterized in that the mould consists of two moulds (25, 26; 27, 28) which are placed parallel and next to one another, and the guide means (12) for the clamp device (49, 50), which is provided with clamps (13, 14; 39, 40) for two strips spaced apart (one for each mould), is situated between the moulds (25, 27; 26, 28).

7. Apparatus according to one or more of the preceding claims, characterized in that upstream of the preliminary station (11), referring to the direction of transport, an apparatus is disposed which has at least one cassette (5) which contains a number of strips provided with components and lying one above the other in horizontal slide guides, and which is movable stepwise in the vertical direction in steps corresponding to the vertical distance between the strips, said cassette having an open end wall, while the apparatus has a reciprocatingly movable gripping and transport device (17) which is provided with a gripper (18, 19) adapted to act on the short front edge of a strip contained in the cassette (5) and to move this strip out of the open end wall of the cassette (5) and deposit it at the preliminary station (11).

8. Apparatus according to one or more of the preceding claims, characterized in that downstream of the mould or moulds (25, 26, 27, 28) and upstream of the discharge device, referring to the direction of transport, a stripping or break-off device (36) is disposed which lies in the path of the sprues (116) attached to the strips (115) moved by the clamp device (39, 40) out of the mould (25, 26, 27, 28) and towards the discharge device (37, 38).

9. Apparatus according to one or more of the preceding claims, characterized in that the discharge device is provided with a set of support strips (123, 124) adapted to move downwards stepwise and to pass through vertical openings (122) in the side wall of a holding cassette (37, 38).

10. Apparatus according to claim 9, characterized in that next to the support strips (123, 124) projecting into the cassette (37, 38) transversely movable fingers (132) are disposed, which are adapted to move a strip (125, 126) which has been freed by a clamp device (40), sideways to a position above the cassette (37, 38) and to deposit it therein.

11. Apparatus according to claim 10, characterized in that said fingers (132) consist of an elongate shell (133) of elastic material having a bellows-like profile on the side remote from the cassette (37, 38) and are adapted to be connected to a source (134) of medium under pressure.

12. Apparatus according to one or more of the preceding claims 7 to 11, characterized in that the preliminary station (11), the mould (25, 26, 27, 28) and the discharge station (37, 38) are constructed to receive two strips at a time, one behind the other, each clamp (13, 14, 39, 40) being constructed for simultaneously handling these two strips.

13. Apparatus according to claim 12, characterized in that the reciprocatingly movable gripper (17, 18, 19) is provided with a control mechanism which in each case first allows the gripper (17, 18, 19) to make a long movement in order to place the foremost of the two strips in the preliminary station (11), and then a short movement to position the second strip.

14. Apparatus according to one or more of the preceding claims, characterized in that each clamp consists of a fixed jaw (72) and a jaw (71) pivoting about a longitudinal axis (69, 70), the two jaws (71, 72) being held in the open position by a compression spring (75), while opposite the spring acting on an arm (74) of the movable jaw (71) a hose (79, 80) is disposed which acts on the other side of the arm (74) and which can be inflated by means of a medium under pressure in order to close the clamp (71, 72).

15. Apparatus according to one or more of the preceding claims, characterized in that the guide track (12, 44, 45, 47, 48, 50, 51, 52, 53) for the clamp device (49, 50) is mounted for upward and downward movement parallel to itself in the vertical direction, and is coupled to an operating mechanism (42, 43).

16. Apparatus according to claim 15, characterized in that the guide track consists of fixed parallel rods fastened to a carrier beam (12) and in the form of one pair of rods (47, 48) at the preliminary station and one pair of rods (52, 53) at the discharge station, the front and rear ends of the clamp device (49, 54) being guided by means of guide bushes on the pairs of rods (47, 48, 52, 53) and the front end (58) being coupled to an endless cogged belt (57) adapted to move to-and-fro in the transport direction and situated at the discharge station (37, 38), which belt (57) is coupled to a drive motor (61), while the support beam (12) is guided for sliding by means of two vertical columns (42, 43) in bushes on the frame of the apparatus, these columns being joined by a crossbar coupled to a hydraulic operating cylinder.

**Patentansprüche**

1. Einrichtung zum Verkapseln elektronischer Bauteile mit Kunststoff, wobei die elektronischen Bauteile an den Leitern eines Streifens befestigt sind, der mehrere Bauteile enthält und nach der Verkapselung mit Kunststoff in Einzelteile zu unterteilen ist, wobei die Einrichtung aus wenigstens einer Form mit einer unteren Formhälfte (25, 26, 27, 28) und einer oberen Formhälfte (100, 103), die auf- und abwärtsbewegbar ist, einer Angußvorrichtung (29, 30), die an einer Längsseite der Form (25, 26, 27, 28) angeordnet ist, und einer Vorrichtung (33, 34) zur Zuführung von Kunststoffpellets besteht, wobei die Form (25, 26, 27, 28) so ausgebildet ist, daß der bzw. die Streifen in Streifenlängsrichtung in die bzw. aus der Form (25, 26, 27, 28) in einem schrittweisen Vorgang in ein und derselben Bewegungsrichtung bewegbar sind, dadurch gekennzeichnet, daß an der der Angußvorrichtung fernen anderen Längsseite der Form bzw. Formen eine Führungsbahn (12) vorgesehen ist, die parallel zu der Längsseite verläuft und auf der eine Einspannvorrichtung (13, 14, 39, 40) verschiebbar geführt ist, die auf den Längsrand eines Streifens einwirken kann und durch Längsverschiebung diesen in der Form (25, 26, 27, 28) anordnen und nach der Verkapselung aus der Form (25, 26, 27, 28) entfernen kann, während Mittel zum Öffnen und Schließen der Einspannvorrichtung und für die Vertikalbewegung des Streifens während seiner Einführung in die Form (25, 26, 27, 28) und seiner Entnahme aus dieser vorgesehen sind.

2. Einrichtung nach Anspruch 1, dadurch gekennzeichnet, daß die verschiebbare Einspannvorrichtung (13, 14, 39, 40, 49, 54) zwischen einer aufstrom von der Form (25, 26, 27, 28) in Transportrichtung befindlichen Vor-Station (11), der Form (25, 26, 27, 28) und einer der Form (25, 26, 27, 28) nachgeschalteten Austragstation (37, 38) bewegbar ist.

3. Einrichtung nach Anspruch 1 oder 2, dadurch gekennzeichnet, daß die Einspannvorrichtung (49, 54) aus zwei Einspanneinheiten (13, 14; 39, 40) besteht, die in einem unveränderlichen Abstand voneinander liegen und miteinander zur Ausführung einer gleichzeitigen Längsbewegung verbunden sind, daß der Abstand zwischen der Vor-Station (11) und der Form (25, 26, 27, 28) sowie der Abstand zwischen der Form (25, 26, 27, 28) und der Austragstation (37, 38) mit dem Abstand zwischen den Einspanneinheiten (13, 14; 39, 40) zusammenfällt, und daß die Länge der Längsverschiebung der Einspannvorrichtung (13, 14; 39, 40) für jede Vorwärts- oder Rückwärtsbewegung gleich diesem Abstand ist.

4. Einrichtung nach Anspruch 2 oder 3, dadurch gekennzeichnet, daß die Vor-Station (11) aus einer Tragfläche (11) und einer Positioniereinheit (17) besteht.

5. Einrichtung nach den Ansprüchen 2, 3 oder 4, dadurch gekennzeichnet, daß die Tragfläche der Vor-Station Heizmittel aufweist.

6. Einrichtung nach einem oder mehreren der vorhergehenden Ansprüche, dadurch gekennzeichnet, daß die Form aus zwei Formen (25, 26; 27, 28) besteht, die parallel und nebeneinander angeordnet sind, und daß die Führungsmittel (12) für die Einspannvorrichtung (49, 50), die Einspanneinheiten (13, 14; 39, 40) für zwei voneinander beabstandete Streifen (jeweils eine für jede Form) aufweist, zwischen den Formen (25, 27, 26, 28) liegen.

7. Einrichtung nach einem oder mehreren der vorhergehenden Ansprüche, dadurch gekennzeichnet, daß aufstrom von der Vor-Station (11), bezogen auf die Transportrichtung, eine Vorrichtung angeordnet ist, die wenigstens eine Kassette (5) aufweist, die eine Anzahl Streifen enthält, die mit Bauteilen versehen sind und in horizontalen Gleitführungen übereinanderliegen, und die schrittweise in Vertikalrichtung in Schritten, die dem vertikalen Abstand zwischen den Streifen entsprechen, bewegbar ist, wobei die Kassette eine offene Endwand hat, während die Vorrichtung eine hin- und herbewegbare Greif- und Transportvorrichtung (17) aufweist, die mit einem Greifwerkzeug (18, 19) versehen ist, das auf die kurze Vorderkante eines in der Kassette (5) befindlichen Streifens wirkt und diesen Streifen aus der offenen Endwand der Kassette (5) herausbewegt und an der Vor-Station (11) ablegt.

8. Einrichtung nach einem oder mehreren der vorhergehenden Ansprüche, dadurch gekennzeichnet, daß abstrom von der Form bzw. den Formen (25, 26, 27, 28) und aufstrom von der Austragvorrichtung, bezogen auf die Transportrichtung, eine Abstreifoder Abbrechvorrichtung (36) angeordnet ist, die in der Bahn der an den Streifen (115), die von der Einspannvorrichtung (39, 40) aus der Form (25, 26, 27, 28) heraus und zur Austragvorrichtung (37, 38) bewegt werden, befestigten Angüsse (116) liegt.

9. Einrichtung nach einem oder mehreren der vorhergehenden Ansprüche, dadurch gekennzeichnet, daß die Austragvorrichtung einen Satz Tragstreifen (123, 124) aufweist, die schrittweise nach unten bewegbar und durch vertikale Öffnungen (122) in der Seitenwand einer Haltekassette (37, 38) führbar sind.

10. Einrichtung nach Anspruch 9, dadurch gekennzeichnet, daß den in die Kassette (37, 38) vorstehenden Tragstreifen (123, 124) zunächstliegend querbewegliche Finger (132) angeordnet sind, die einen Streifen (125, 126), der von einer Einspannvorrichtung (40) freigegeben wurde, seitlich in eine Lage über der Kassette (37, 38) bewegen und ihn darin ablegen.

11. Einrichtung nach Anspruch 10, dadurch gekennzeichnet, daß die Finger (132) aus einer länglichen Hülse (133) aus elastischem Werkstoff mit balgartigem Profil auf der von der Kassette (37, 38) fernen Seite bestehen und mit einer Druckmittelquelle (134) verbindbar sind.

12. Einrichtung nach einem oder mehreren der vorhergehenden Ansprüche 7–11, dadurch gekennzeichnet, daß die Vor-Station (11), die Form (25, 26, 27, 28) und die Austragstation (37, 38) so aufgebaut sind, daß sie gleichzeitig zwei hintereinanderliegende Streifen aufnehmen, wobei jede Einspannvorrichtung (13, 14, 39, 40) so aufgebaut ist, daß sie diese beiden Streifen gleichzeitig handhabt.

13. Einrichtung nach Anspruch 12, dadurch gekennzeichnet, daß der hin- und herbewegbare Greifer (17, 18, 19) einen Verstellmechanismus aufweist, der in jedem Fall dem Greifer (17, 18, 19) zuerst eine lange Bewegung, um den vordersten der beiden Streifen in der Vor-Station (11) zu plazieren, und dann eine kurze Bewegung zur Positionierung des zweiten Streifens erlaubt.

14. Einrichtung nach einem oder mehreren der vorhergehenden Ansprüche, dadurch gekennzeichnet, daß jede Einspannvorrichtung aus einem ortsfesten Backen (72) und einem um eine Längsachse (69, 70) schwenkbaren Backen (71) besteht, wobei die beiden Backen (71, 72) in der Offenstellung durch eine Kompressionsfeder (75) gehalten sind, während entgegengesetzt zu der einen Arm (74) des beweglichen Backens (71) beaufschlagenden Feder ein Schlauch (79, 80) angeordnet ist, der auf die andere Seite des Arms (74) wirkt und durch das Druckmittel aufblasbar ist, um die Einspannvorrichtung (71, 72) zu schließen.

15. Einrichtung nach einem oder mehreren der vorhergehenden Ansprüche, dadurch gekennzeichnet, daß die Führungsbahn (12, 44, 45, 47, 48, 50, 51, 52, 53) für die Einspannvorrichtung (49, 50) für eine Auf- und Abwärtsbewegung parallel zu sich selbst in Vertikalrichtung angeordnet und mit einem Betätigungsmechanismus (42, 43) gekoppelt ist.

16. Einrichtung nach Anspruch 15, dadurch gekennzeichnet, daß die Führungsbahn aus an einem Trägerelement (12) ortsfest befestigten parallelen Stangen in Form eines Paars von Stangen (47, 48) an der Vor-Station und eines Paars von Stangen (52, 53) an der Austragstation besteht, wobei die Vorder- und Hinterenden der Einspannvorrichtung (49, 54) mittels Führungshülsen an den Stangenpaaren (47, 48, 52, 53) geführt sind und das Vorderende (58) mit einem Endloszahnriemen (57) verbunden ist, der in Transportrichtung hin- und herbewegbar und an der Austragstation (37, 38) angeordnet ist, wobei der Riemen (57) mit einem Antriebsmotor (61) verbunden ist, während das Tragelement (12) gleitverschiebbar von zwei vertikalen Ständern (42, 43) in Buchsen am Rahmen der Einrichtung geführt ist und diese Ständer durch ein Querstück verbunden sind, das mit einem Hydraulikzylinder verbunden ist.

## Revendications

1. Appareil permettant d'enrober de matière plastique des composants électroniques fixés sur les conducteurs d'une bande qui comporte de multiples composants et qui, après avoir été enrobée de matière plastique, doit être divisée en éléments séparés, cet appareil étant constitué d'au moins un moule comprenant une moitié inférieure (25, 26, 27, 28) et une moitié supérieure (100, 103) qui est agencée de façon à pouvoir être soulevée et abaissée, un dispositif de coulée (29, 30) qui est disposé sur l'un des côtés longitudinaux du moule (25, 26, 27, 28) et un appareil (33, 34) servant à amener des pastilles de matière plastique, la structure du moule (25, 26, 27, 28) étant telle que la ou les bandes peuvent, suivant sa ou leur direction longitudinale, être rapprochées du moule (25, 26, 27, 28) et en être éloignées dans un seul et même sens de déplacement d'une opération pas à pas, caractérisé en ce que, sur l'autre grand côté du ou des moules, opposé au dispositif de coulée, il est prévu un chemin de guidage (12) qui s'étend parallèlement au grand côté et sur lequel est guidé de manière coulissante un dispositif de serrage (13, 14, 39, 40) qui peut agir sur le bord longitudinal d'une bande et peut, en se déplaçant longitudinalement, placer cette dernière bande dans le moule (25, 26, 27, 28) et l'extraire de ce moule (25, 26, 27, 28) après l'enrobage, tandis que des moyens sont prévus pour ouvrir et fermer le dispositif de serrage et pour déplacer verticalement la bande pendant son introduction dans le moule (25, 26, 27, 28) et son extraction hors de celui-ci.

2. Appareil suivant la revendication 1, caractérisé en ce que le dispositif coulissant de serrage (13, 14, 39, 40, 49, 54) est mobile entre un poste préliminaire (11), situé en amont du moule (25, 26, 27, 28) suivant le sens du transport, le moule (25, 26, 27, 28) et un poste d'évacuation (37, 38) suivant le moule (25, 26, 27, 28).

3. Appareil suivant l'une des revendications 1 et 2, caractérisé en ce que le dispositif de serrage (49, 54) est constitué de deux pinces (13, 14; 39, 40) qui sont situées à une distance fixe l'une de l'autre et sont réunies entre elles en vue d'un déplacement longitudinal simultané, en ce que la distance séparant le poste préliminaire (11) et le moule (25, 26, 27, 28) et celle séparant le moule (25, 26, 27, 28) du poste d'évacuation (37, 38) coïncident avec la distance séparant les pinces (13, 14; 39, 40), et en ce que la longueur du déplacement longitudinal du dispositif de serrage (13, 14; 39, 40) pour chaque mouvement d'avance ou de retour est égale à cette distance.

4. Appareil suivant l'une des revendications 2 et 3, caractérisé en ce que le poste préliminaire (11) est constitué d'une surface de support (11) et de moyens de positionnement (17).

5. Appareil suivant l'une des revendications 2 à 4, caractérisé en ce que la surface de support du poste préliminaire est pourvue de moyens de chauffage.

6. Appareil suivant l'une au moins des revendications précédentes, caractérisé en ce que le moule est constitué de deux moules (25, 26; 27, 28) qui sont disposés parallèlement l'un à côté de l'autre et en ce que les moyens (12) de guidage du dispositif de serrage (49, 50), qui est pourvu de pinces (13, 14; 39, 40) pour deux bandes espacées l'une de l'autre (une pour chaque moule), sont situés entre les moules (25, 27; 26, 28).

7. Appareil suivant l'une au moins des revendications précédentes, caractérisé en ce qu'il est prévu, en amont du poste préliminaire (11) lorsqu'on considère le sens du transport, un appareil comportant au moins une cassette (5) qui contient un certain nombre de bandes pourvues de composants et placées l'une au-dessus de l'autre dans des guides de coulissement horizontal et qui est déplaçable pas à pas en direction verticale, par pas correspondant à la distance verticale séparant les bandes, cette cassette comportant une paroi extrême ouverte, tandis que l'appareil comprend un dispositif de préhension et transport (17), déplaçable en va-et-vient, qui est pourvu d'un organe de préhension (18, 19) destiné à agir sur le bord frontal court d'une bande contenue dans la cassette (5) et à extraire cette bande par la paroi extrême ouverte de la cassette (5) pour la déposer au poste préliminaire (11).

8. Appareil suivant l'une au moins des revendications précédentes, caractérisé en ce qu'il est prévu, en aval du ou des moules (25, 26, 27, 28) et en amont du dispositif d'évacuation lorsqu'on considère le sens du transport, un dispositif (36) de rupture et d'enlèvement des attaques de coulée qui se trouve sur le trajet des attaques de coulée (116) présentes sur les bandes (115) que le dispositif de serrage (39, 40) éloigne du moule (25, 26, 27, 28) et dirige vers le dispositif d'évacuation (37, 38).

9. Appareil suivant l'une au moins des revendications précédentes, caractérisé en ce que le dispositif d'évacuation est pourvu d'une série de pattes de support (123, 124) aptes à se déplacer pas à pas vers le bas et à passer par des ouvertures verticales (122) ménagées dans la paroi latérale d'une cassette de conservation (37, 38).

10. Appareil suivant la revendication 9, caractérisé en ce que qu'il est prévu, près des pattes de support (123, 124) pénétrant dans la cassette (37, 38), des doigts mobiles tranversalement (132) qui sont aptes à déplacer latéralement une bande (125, 126), qui a été libérée par un dispositif de serrage (40), vers une position située au-dessus de la cassette (37, 38) et à la déposer dans cette dernière.

11. Appareil suivant la revendication 10, caractérisé en ce que les doigts (132) comprennent un manchon allongé (133), en matière élastique, possédant un profil en forme de soufflet du côté opposé à la cassette (37, 38) et en ce qu'ils sont agencés de façon à être reliés à une source (134) de fluide sous pression.

12. Appareil suivant l'une au moins des revendications précédentes 7 à 11, caractérisé en ce que le poste préliminaire (11), le moule (25, 26, 27, 28) et le poste d'évacuation (37, 38) sont conçus de façon à recevoir deux bandes à la fois, l'une derrière l'autre, chaque pince (13, 14, 39, 40) étant conçue de façon à manipuler simultanément ces deux bandes.

13. Appareil suivant la revendication 12, caractérisé en ce que l'organe de préhension (17, 18, 19) déplaçable en va-et-vient est pourvu d'un mécanisme de commande qui, dans chaque cas, permet d'abord à l'organe de préhension (17, 18, 19) d'effectuer un déplacement de grande longueur afin de placer au poste préliminaire (11) celle des deux bandes qui est située le plus à l'avant, puis un déplacement plus court afin de mettre en place la seconde bande.

14. Appareil suivant l'une au moins des revendications précédentes, caractérisé en ce que chaque dispositif de serrage est constitué d'une mâchoire fixe (72) et d'une mâchoire (71) pivotant autour d'un axe longitudinal (69, 70), les deux mâchoires (71, 72) étant maintenues en position ouverte par un ressort de compression (75), tandis qu'il est prévu, à l'opposé du ressort agissant sur un bras (74) de la mâchoire mobile (71), un tuyau souple (79, 80) qui agit sur l'autre côté du bras (74) et qui peut être gonflé au moyen d'un fluide sous pression en vue de fermer la pince (71, 72).

15. Appareil suivant l'une au moins des revendications précédentes, caractérisé en ce que le chemin (12, 44, 45, 47, 48, 50, 51, 52, 53) de guidage du dispositif de serrage (49, 50) est monté de façon qu'il se soulève et s'abaisse parallèlement à lui-même en direction verticale et en ce qu'il est accouplé à un mécanisme de manœuvre (42, 43).

16. Appareil suivant la revendication 15, caractérisé en ce que le chemin de guidage est constitué de tiges parallèles fixes, fixées sur une poutre de support (12) et constituées d'une paire de tiges (47, 48) situées au poste préliminaire et d'une paire de tiges (52, 53) situées au poste d'évacuation, les extrémités avant et arrière du dispositif de serrage (49, 54) étant guidées sur les paires de tiges (47, 48, 52, 53) au moyen de douilles de guidage et l'extrémité avant (58) étant accouplée à une courroie crantée sans fin (57) agencée de façon à se déplacer en va-et-vient suivant la direction de transport et située au poste d'évacuation (37, 38), cette courroie (57) étant accouplée à un moteur d'entraînement (61), tandis que la poutre de support (12) est guidée en coulissement à l'aide de deux colonnettes verticales (42, 43) tranversant des manchons prévus sur le châssis de l'appareil, ces colonnettes étant réunies par une barre transversale accouplée à un vérin hydraulique.

# fig-1(1)

fig-1(2)

fig-1(3)

Fig-2(1)

65  64  13 63    14    55    47,48    39    40    54

44    49    40    12    45    55    50    56

42

EP 0 202 701 B1

Fig-2(2)

Fig-3(1)

EP 0 202 701 B1

Fig-3(2)

Fig-4

# Fig-5

EP 0 202 701 B1

Fig-6

# Fig-7

Fig-8

# Fig-9

# Fig-10

Fig-11

# Fig-12

# fig-13

EP 0 202 701 B1

fig-14